# EUROPÄISCHE PATENTSCHRIFT

(11) **EP 0 883 560 B1**
(45) Veröffentlichungstag und Bekanntmachung des Hinweises auf die Patenterteilung: **20.10.1999**
(21) Anmeldenummer: 97904412.0
(22) Anmeldetag: 11.02.1997
(51) Int. Cl.: B65G 53/46, A01F 25/16

(54) **VERFAHREN ZUM AUSTRAGEN VON SCHÜTTGUT AUS EINEM SILOBEHÄLTER**
METHOD FOR REMOVING BULK MATERIAL FROM A SILO
PROCEDE POUR EXTRAIRE UN PRODUIT EN VRAC D'UN SILO

(30) Priorität: 19.02.1996 DE 29602728 U; 06.11.1996 DE 19645598
(43) Veröffentlichungstag der Anmeldung: 16.12.1998
(73) Patentinhaber: HAAKE, Hinrich, 22926 Ahrensburg (DE)
(72) Erfinder: HAAKE, Hinrich, 22926 Ahrensburg (DE)
(74) Vertreter: Glaeser, Joachim, Dipl.-Ing.
(86) Internationale Anmeldenummer: EP9700614
(87) Internationale Veröffentlichungsnummer: WO9729984

(56) Entgegenhaltungen:
- EP-A- 0 300 113
- DE-A- 3 123 283
- FR-A- 2 353 465
- US-A- 4 286 910

## Beschreibung

Die Erfindung bezieht sich auf ein Verfahren zum Austragen von fließfähigem Schüttgut, nämlich Silagefutter, aus einem Silobehälter mit einem an der Auslassöffnung gasdicht angeschlossenen Behälter mit Eingangs- und Ausgangsventil, einem zusätzlichem Anschluss an dem Behälter und mit einer Membran in dem im wesentlichen zylinderförmig ausgestalteten Behälter. Ein peristaltisch wirkendes Ventil zur Übertragung von Material zwischen einer ersten und einer zweiten Zone ist bekannt (US-A-4 286 910), kann aber nicht eingesetzt werden, wenn es gilt, den Übertritt von Luft zu verhindern.

In der Landwirtschaft werden Silagebehälter eingesetzt, um Silagegut darin zu speichern und je nach Bedarf am unteren Ende des Behälters auszutragen. Im Zusammenhang mit der Flüssigfütterung wird hierbei bevorzugterweise eine Art Siphon eingesetz, so dass während des Austragens kein Sauerstoff in den Silagebehälter eindringen kann. Eindringender Sauerstoff würde nämlich zur Beeinträchtigung der Futterqualität führen, insbesondere dann, wenn der Behälter selbst nicht mehr vollgefüllt ist. Auch kann bei einem solchen Austragvorgang sichergestellt werden, dass kein Co₂ aus dem Behälter herausströmen kann.

Beim Austragen von Trockenfutter aus einem derartigen Behälter mußte bislang mit mehr oder weniger großen Verlusten gerechnet werden. Beim Austragvorgang konnte zunächst einmal CO₂ aus dem Inneren des Silobehälters herausgelangen bzw. wurde zusammen mit dem Trockenfutter ausgetragen. Am Ende des Austragvorganges konnte dann Sauerstoff in den Behälter eindringen und dies führte regelmäßig zum Verderb des darin aufbewahrten Futters, insbesondere in den Frühjahrsmonaten, also dann, wenn der Silagebehälter nur noch gering gefüllt war.

Hier nun will die vorliegende Erfindung Abhilfe schaffen und sieht hierzu Verfahren mit den kennzeichnenden Merkmalen der Ansprüche 1 bis 3 vor.

Bei dem Verfahren gemäß der Erfindung wird kurz vor dem eigentlichen Entleerungsvorgang ein Vakuum in dem Behälter erzeugt, bevor das ausgebrachte Futter in diesen Behälter hineingelangt. Auf diese Art und Weise kann sichergestellt werden, daß kein Sauerstoff in den Silobehälter zurückgelangt. Hierzu erweist sich eine zylinderförmige Membran als sinnvoll, welche in ihrem Inneren das ausgetragene Futter aufnimmt und sich dabei auf die Innenumrisse des zylinderförmigen Behälters erweitert. Danach wird die Verbindung zum Silobehälter unterbrochen und das sich im Inneren der Membran befindliche Futter wird ausgetragen. Auf diese Art und Weise ist immer sichergestellt, daß von Außen her kein Sauerstoff in den Innenraum des Silobehälters gelangen kann.

Für die Erfindung ist wesentlich, eine zylinderförmige Membran vorzusehen.

Bei einer besonders bevorzugten Ausführungsform der Erfindung wird der Behälter an einer Waage befestigt, so daß während des Austragens eichgenaue Messungen des ausgetragenen Futters möglich sind.

Die Erfindung wird nachstehend anhand der Zeichnung beispielsweise erläutert.
- Fig. 1: zeigt eine Ausführungsform einer Austragvorrichtung in einem ersten Betriebszustand.
- Fig. 2: zeigt die Austragvorrichtung in einem zweiten Betriebszustand.

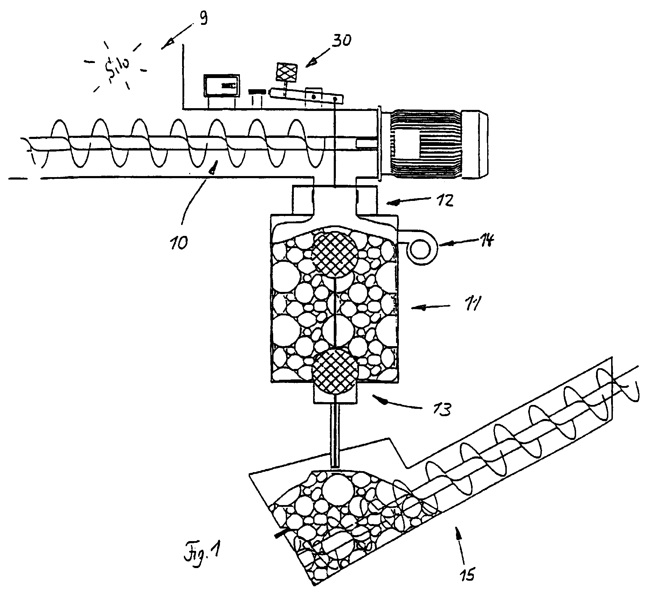

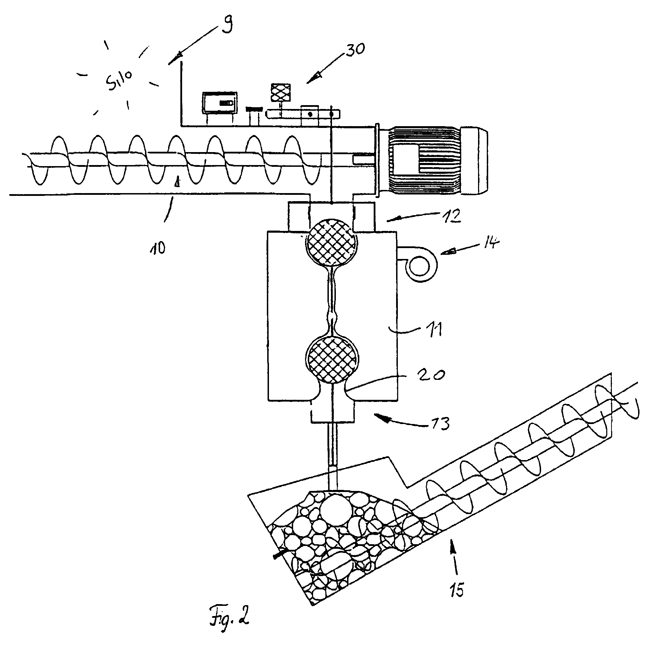

In den Figuren 1 und 2 ist im unteren Bereich eines Silobehälters 9 eine Ausstragschnecke 10 gezeigt, die elektromotorisch angetrieben werden kann und aus dem Innenraum des Silobehälters 9 Schüttgut nach außen transportiert. Das Schüttgut gelangt in einen zylinderförmigen Behälter 11, der nach oben hin über ein Ventil 12 und nach unten hin über ein Ventil 13 dicht abgeschlossen werden kann. Unterhalb des Behälters 11 befindet sich eine Aufnahmevorrichtung 15 und eine Fördereinrichtung sorgt dafür, daß das ausgetragene Futter zur eigentlichen Fütterungsstelle transportiert werden kann.

Die Wirkungsweise der Vorrichtung ist folgende. Zu Beginn des Entleerungsvorganges ist das untere Ventil 13 verschlossen und das obere Ventil 12 geöffnet (Fig. 1). Auf diese Art und Weise gelangt Futter aus dem Silo 9 in den Behälter 11. Sodann wird das obere Ventil 12 geschlossen und das untere Ventil 13 geöffnet (Fig. 2). Bevor ein erneuter Entleerungsvorgang stattfindet, wird auch das untere Ventil 13 geschlossen und über die Öffnung 14 wird der Innenraum des Behälters 11 evakuiert. Sodann kann erneut ein Entleerungsvorgang eingeleitet werden, in dem das obere Ventil 12 geöffnet wird.

Im Innenraum des Behälters 11 befindet sich eine zylinderförmige Membran 20, welche jeweils oben und unten an dem Behälter dicht befestigt ist.

Die Wirkungsweise der Membran ist wie folgt:

Zu Beginn des Entleerungsvorganges wird über die Schnecke 10 Material über das geöffnete Ventil 12 in den Innenraum der Membran 20 geleitet, wobei die Membran sich letztendlich an die Wandung des Behälters 11 anlegt. Sodann wird das obere Ventil 12 geschlossen und das untere Ventil 13 geöffnet, so daß sich das im Inneren der Membran 20 befindliche Material nach unten hin entleert. Dieser Entleerungsvorgang kann über Druckluft unterstützt werden, die über die Öffnung 14 eingeleitet wird. In der Fig. 2 ist die Membran (20) im entleerten Zustand gezeigt und ist in sich zusammengefallen und schließt dadurch praktisch das Volumen 0 ein, wohingegen sie sich in dem beladenen Zustand (Fig. 1) eng an die Wandung des Behälters 11 innen anlehnt.

Mit 30 ist eine Waage bezeichnet, an der der Behälter aufgehängt ist, so daß die ausgetragene Futtermenge gewogen werden kann.

## Patentansprüche

1. Verfahren zum Austragen von fließfähigem Schuttgut, nämlich Silagefutter, aus einem Silobehälter (9) mit einem an der Auslaßöffnung (10) gasdicht angeschlossenen Behälter (11) mit Eingangs- und Ausgangsventil (12,13), einem zusätzlichen Anschluß (14) an dem Behälter und mit einer Membran (20) in dem im wesentlichen zylinderförmig ausgestalteten Behälter (11), dadurch gekennzeichnet, daß die zylinderförmige Membran sich bei geöffnetem Eingangsventil (12) an die Wandung des Behälters anlegt und Schüttgut aufnimmt und bei geschlossenem Eingangsventil und geöffnetem Ausgangsventil (13) das im Inneren der Membran befindliche Material nach unten hin entleert.

2. Verfahren nach Anspruch 1, dadurch gekennzeichnet, daß über den Anschluß (14) bei geöffnetem Eingangsventil (12) der Innenraum des Behälters (11) bzw. der die Membran umgebende Raum evakuiert wird und daß über den Anschluß (14) bei geschlossenem Eingangsventil (12) und geöffnetem Ausgangsventil (13) der Innenraum des Behälters (11) und der die Membran umgebende Raum unter Druck gesetzt wird.

3. Verfahren nach Anspruch 1 oder 2, dadurch gekennzeichnet, daß der Behälter (11) mittels einer Waage gewogen wird.

## Claims

1. Method for discharge of flowable bulk material, i.e. silage feed stuff, from a silo container (9) comprising a container (11) gastightly connected to the discharge opening (10) with an input valve and an output valve (12, 13), an additional connection (14) to the container and a membrane (20) in the substantially cylindrically designed container (11), characterised in that the cylindrical membrane abuts against the walls of the container when the input valve (12) is open and receives the bulk material, and empties the material located in the interior of the membrane downward, when the input valve (13) is closed and the output valve is open.

2. Method according to claim 1, characterised in that the interior of the container (11) or the space surrounding the membrane, respectively, is evacuated via the connection (14), when the input valve (12) is open, and that the interior of the container (11) and the space surrounding the membrane is pressurized via the connection (14), when the input valve (12) is closed and the output valve (13) is open.

3. Method according to claim 1 or 2, characterised in that the container (11) is weighed by means of a scale.

## Revendications

1. Procédé pour décharger un produit fluide en vrac, plus précisément du fourrage ensilé, à partir d'un silo (9) comportant un récipient (11) raccordé d'une manière étanche aux gaz à l'orifice d'extraction (10) et équipé d'une vanne d'entrée et d'une vanne de sortie (12, 13), un raccordement supplémentaire (14) au récipient, ainsi qu'une membrane (20) dans le récipient (11) qui a une configuration essentiellement cylindrique, caractérisé en ce que la membrane cylindrique s'appuie, quand la vanne d'entrée (12) est ouverte, contre la paroi du récipient, en recevant le produit en vrac, et, quand la vanne d'entrée est fermée et la vanne de sortie (13) est ouverte, vide vers le bas le produit se trouvant à l'intérieur de la membrane.

2. Procédé selon la revendication 1, caractérisé en ce que, la vanne d'entrée (12) étant ouverte, on fait le vide, par le raccordement (14), dans l'espace intérieur du récipient (11) ou dans l'espace qui entoure la membrane, et que, la vanne d'entrée (12) étant fermée et la vanne de sortie (13) étant ouverte, on met sous pression par le raccordement (14) l'espace intérieure du récipient (11) et l'espace qui entoure la membrane.

3. Procédé selon la revendication 1, caractérisé en ce que le récipient (11) est pesé à l'aide d'une balance.
